# EUROPEAN PATENT APPLICATION

(11) **EP 2 023 296 A1**
(43) Date of publication of application: **11.02.2009**
(21) Application number: 08012687.3
(22) Date of filing: 14.07.2008
(51) Int. Cl.: G06T 15/70

(54) **Action builds and smart builds for use in an presentation application**

(30) Priority: 06.08.2007 US 834614
(71) Applicant: Apple Inc., Cupertino, CA 95014 (US)
(72) Inventor: Tilton, Eric, Austin, Texas 78727 (US); Flider, Mark, Cupertino, CA 95014 (US); Vaughan, Brad, Mt. Lebanon, Pennsylvania 15228 (US); Peirce, Michael, Lewis Center, Ohio 43035 (US)
(74) Representative: Diehl & Partner

(57) **Abstract**

A presentation application for animating objects placed on slides is provided. Using the presentation application, the user may add objects to slides of a presentation, and apply animations to the objects. The animations may include action builds (e.g., fundamental animations) and smart builds (e.g., complex combinations of action builds). The animations used in slides may be pre-processed, or may instead be rendered in real-time as the slides are being presented. The real-time rendering may be performed by graphics circuitry, such as the GPU of a video card.

## Description

### Background of the Invention

This invention is related to a presentation application and to animations of objects on slides of presentations using a presentation application.

Electronic devices, including for example computers, may be used to implement presentation applications. Using presentation applications, users may generate one or more slides that include different information, and may present the slides to an audience. By using a presentation application, the user may bring key points to the audience's attention and emphasize the focus of the presentation.

To further improve the quality of presentations, some presentation applications may include simple animations of text as it enters and leaves a screen. Some presentation applications may also provide for the static display of images or video. While these features may improve the appeal of a presentation, such features remain rudimentary.

### Summary of the Invention

Systems and methods for providing animations of media objects displayed on slides of a presentation are provided. In some embodiments, the animations may be rendered in real-time as the slides are presented by graphics circuitry.

The user of an electronic device may access a presentation application to create slides for a presentation. In some embodiments, the user may add an object to a slide (e.g., text, audio, video, or an image), and direct the presentation application to animate the object. For example, the user may direct the presentation application to apply an action build to the object. The presentation application may include any suitable action builds including, for example, Rotate, Opacity, Move and Scale action builds.

When the user presents a slide on which there is an action build, the electronic device may, in real-time, provide the action build information to graphics circuitry (e.g., a video card) and output an animation rendered by the graphics circuitry. By using the graphics circuitry to provide the animation (e.g., instead of the electronic device's primary processor), the presentation application may display more complex animations without significantly affecting the electronic device processor resources.

In some embodiments, the presentation application may provide the user with pre-existing combinations of action builds known as smart builds. To apply a smart build to the slide of a presentation, the user may first select a smart build, and subsequently select several objects for which the smart build may be enabled. When the user presents a slide that includes a smart build, the electronic device may, in real-time, provide the smart build information to graphics circuitry (e.g., a video card) and output an animation rendered by the graphics circuitry. By providing complex combinations of pre-existing action builds, the presentation application may allow users to create more aesthetically pleasing presentations while maintaining their ease of use.

### Brief Description of the Drawings

The above and other features of the present invention, its nature and various advantages will be more apparent upon consideration of the following detailed description, taken in conjunction with the accompanying drawings, and in which:

FIG. 1 is a simplified block diagram of an illustrative electronic device in accordance with one embodiment of the invention;

FIG. 2 is an illustrative display of a presentation application in accordance with one embodiment of the invention;

FIG. 3 is an illustrative display of a presentation application screen in response to activating an action build mode in accordance with one embodiment of the invention;

FIG. 4 is an illustrative display of a presentation application screen displayed in response to receiving a user selection of a Move build in accordance with one embodiment of the invention;

FIG. 5 is an illustrative display of a presentation application in which several Move builds are implemented in accordance with one embodiment of the invention;

FIG. 6 is an illustrative display of a presentation application screen displayed in response to receiving a user selection of an Opacity build in accordance with one embodiment of the invention;

FIG. 7 is an illustrative display of a presentation application screen displayed in response to receiving a user selection of a Rotate build in accordance with one embodiment of the invention;

FIG. 8 is an illustrative display of a presentation application screen displayed in response to receiving a user selection of a Scale build in accordance with one embodiment of the invention;

FIG. 9 is an illustrative display of a presentation application screen displayed in response to receiving a user selection of several builds in accordance with one embodiment of the invention;

FIG. 10 is an illustrative display of a presentation application defining the settings applied to several builds in accordance with one embodiment of the invention;

FIG. 11 is a flow chart of an illustrative process for applying an action build to an object of a slide in accordance with one embodiment of the invention;

FIG. 12 is an illustrative display of a presentation application screen displayed in response to activating a smart build mode in accordance with one embodiment of the invention;

FIG. 13 is an illustrative display of a build inspector of a presentation application screen displayed in response to a user selection of a smart build menu in accordance with one embodiment of the invention;

FIG. 14 is an illustrative display of a presentation application screen displayed in response to receiving a user selection of a Dissolve smart build in accordance with one embodiment of the invention;

FIG. 15 is an illustrative display of a presentation application screen displayed in response to receiving a user selection of media objects for a Dissolve smart build in accordance with one embodiment of the invention;

FIG. 16 is an illustrative display of a presentation application screen that includes Dissolve smart build options in accordance with one embodiment of the invention;

FIG. 17 is an illustrative display of a presentation application screen displayed in response to receiving a user selection of a Flip smart build in accordance with one embodiment of the invention;

FIGS. 18 and 19 are illustrative displays of presentation application screens showing the Flip smart build applied to media objects in a preview window in accordance with one embodiment of the invention;

FIG. 20 is an illustrative display of a presentation application screen displayed in response to receiving a user selection of a Grid smart build in accordance with one embodiment of the invention;

FIG. 21 is an illustrative display of a presentation application screen displayed in response to receiving a user selection of a Push smart build in accordance with one embodiment of the invention;

FIG. 22 is an illustrative display of a presentation application screen displayed in response to receiving a user selection of a Shuffle smart build in accordance with one embodiment of the invention;

FIG. 23 is an illustrative display of a presentation application screen showing a Shuffle smart build animation in accordance with one embodiment of the invention;

FIG. 24 is an illustrative display of a presentation application screen displayed in response to receiving a user selection of a Spin smart build in accordance with one embodiment of the invention;

FIG. 25 is an illustrative display of a presentation application screen showing a Spin smart build animation in accordance with one embodiment of the invention;

FIG. 26 is an illustrative display of a presentation application screen displayed in response to receiving a user selection of a Spinning Cube smart build in accordance with one embodiment of the invention;

FIG. 27 is an illustrative display of a presentation application screen showing a Spinning Cube smart build animation in accordance with one embodiment of the invention;

FIG. 28 is an illustrative display of a presentation application screen displayed in response to receiving a user selection of a Swap smart build in accordance with one embodiment of the invention;

FIG. 29 is an illustrative display of a presentation application screen showing a Swap smart build animation in accordance with one embodiment of the invention;

FIG. 30 is an illustrative display of a presentation application screen displayed in response to receiving a user selection of a Thumb Through smart build in accordance with one embodiment of the invention;

FIG. 31 is an illustrative display of a presentation application screen showing a Thumb Through smart build animation in accordance with one embodiment of the invention;

FIG. 32 is an illustrative display of a presentation application screen displayed in response to receiving a user selection of a Turntable smart build in accordance with one embodiment of the invention;

FIG. 33 is an illustrative display of a presentation application screen showing a Turntable smart build animation in accordance with one embodiment of the invention; and

FIG. 34 is a flowchart of an illustrative process for adding a smart build to a slide of a presentation in accordance with one embodiment of the invention.

### Detailed Description

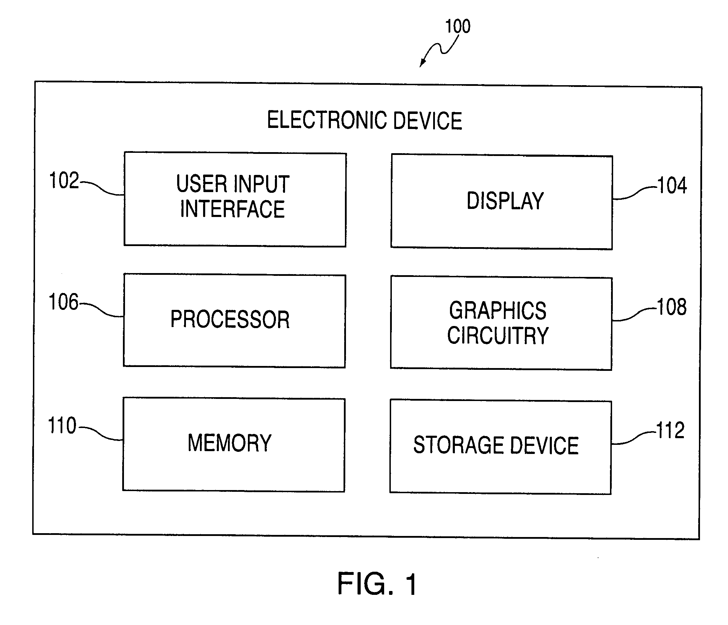

FIG. 1 is a simplified block diagram of an illustrative electronic device in accordance with one embodiment of the invention. Electronic device 100 may include, among other components, user input interface 102, display 104, processor 106, graphics circuitry 108, memory 110, and storage device 112. Processor 106 may be operative to communicate with the other components of electronic device 100, and control the operation of system 100. Processor 106 may be any suitable type of processor, such as a central processing unit (CPU) or a microcontroller. In some embodiments, processor 106 may execute instructions stored in memory 110.

Memory 110 may include one or more different types of memory that may be used to perform device functions. For example, memory 110 may include cache, Flash, ROM, and/or RAM. In some embodiments, memory 110 may be specifically dedicated to storing firmware. For example, memory 110 may be provided for storing firmware for device applications (e.g., operating system, user interface functions, and processor functions).

Storage device 112 may include one or more suitable storage mediums, such as a hard-drive, permanent memory such as ROM, semi-permanent memory such as RAM, or cache. Storage device 112 may be used for storing media (e.g., audio and video files), text, pictures, graphics, or any suitable user-specific or global information that may be used by electronic device 100. In some embodiments, storage device 112 may store programs or applications that may be run on processor 106, maintain files formatted to be read and edited by one or more of the applications, and store any additional files that may aid the operation of one or more applications (e.g., files with metadata). It will be understood that data may be stored interchangeably in memory 110 and storage device 112, based on the operation of the electronic device.

Electronic device 100 may include user input interface 102 and display 104 for providing a user with the ability to interact with electronic device 100. For example, user input interface 102 and display 104 may provide an interface for a user to interact with an application running on processor 106. User input interface 102 may take a variety of forms, such as a keyboard/keypad, computer mouse, click wheel, button, or touchscreen. Display 104 may include a liquid crystal display (LCD) or any other suitable display device for presenting information or media to a user. Display 104 may be controlled by graphics circuitry 108. Graphics circuitry 108 may include a 2D graphics card, or may have 3D capabilities (e.g., a GPU operative to perform graphics computations).

Electronic device 100 may be any device or group of devices capable of providing an application for editing media or creating presentations. In some embodiments, electronic device 100 may include a user computer system, such as a desktop computer (e.g., an iMac) or a laptop computer (e.g., a PowerBook or a MacBook). Device 100 may run any suitable computer operating system, such as a Mac OS, and may include a set of applications stored in, for example, storage device 112 that are compatible with the particular operating system.

The applications available to a user of electronic device 100 may be grouped into application suites. The suites may include applications that provide similar or related functionalities. For example, the applications in one suite may include word processing and publishing applications (e.g., Keynote and Pages within the iWorks suite), and another suite may include media editing tools (e.g., iWeb within the iLife suite). The applications within a given suite may include similar properties and features to the properties and features of other applications in the particular suite. For example, the applications may have a similar look and feel, may have a similar user interface, may include related features or functions, may allow a user to easily switch between the applications in the suite, or may share any other property or feature of an application.

Therefore, although embodiments of the present invention will generally be described in terms of a presentation application, it should be understood that any of the features or functionalities of an application may be general to one or more applications in a suite that includes a presentation application.

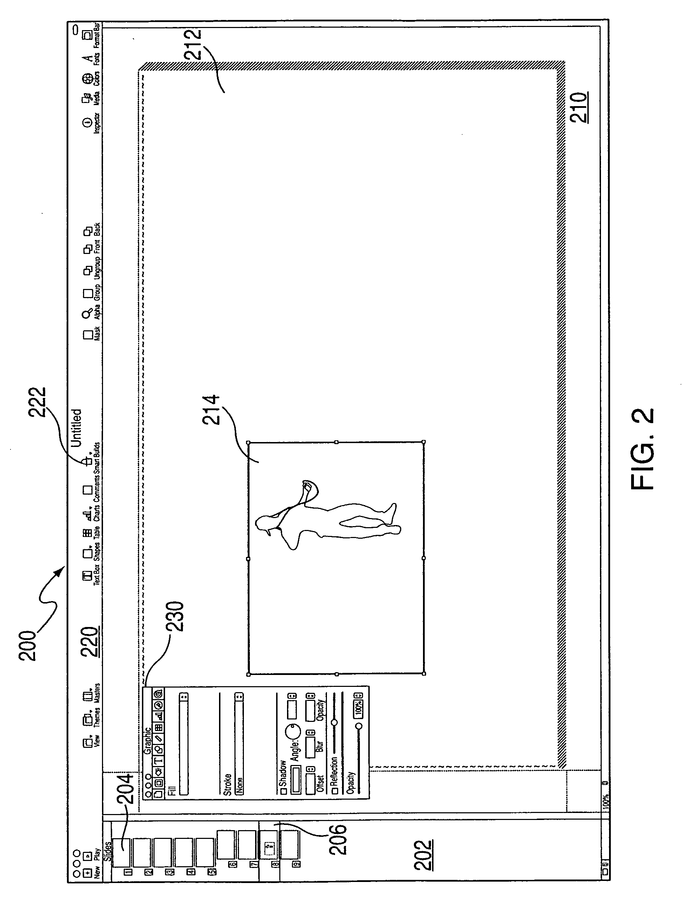

FIG. 2 is an illustrative display of a presentation application in accordance with one embodiment of the invention. The application may be provided by a program stored in memory 110 (FIG. 1) for display on display 104, and may allow a user to, among other things, create a presentation with customizable images, videos, and text. In some embodiments, display 200 may include three panes: slide organizer 202, slide canvas 210, and toolbar 220 for creating and editing various aspects of a presentation. As described below in greater detail, by using these panes, a user may easily move between the slides of a presentation, edit and animate slides, and edit and animate objects (e.g., images, movies, text and tables) present in each slide. It should be understood that size of each pane in display screen 200 is merely illustrative, and that the relative size of each pane may be adjusted by a user.

Slide organizer 202 may display a representation of each slide in a presentation. Slide organizer 202 may include slides 204 of a presentation. Slides 204 may take on a variety of forms, such as an outline of the text in the slide or a thumbnail of the slide. Slide organizer 202 may allow the user to organize the slides prepared using the application. For example, the user may manipulate the order of the slides by dragging a slide from one relative position to another. As illustrated in FIG. 2, any of the slides 204 in slide organizer 202 may also be indented for further organizational clarity.

In response to receiving a user selection of a slide 204 in slide organizer 202, the presentation application may display the slide in slide canvas 210. For example, the slide identified by highlight region 206 may be displayed as slide 212 in slide canvas 210. Slide 212 may include any suitable object 214, including for example text, images, graphics, video, or any other suitable object. In some embodiments, the user may edit different elements of slide 214 from slide canvas 210. For example, the user may edit the settings associated with slide 212 (e.g., the background) or may edit the location, properties, or animation of objects (e.g., object 214) in the slide. The user may change the slide 212 displayed on slide canvas 210 by moving highlight region 206 up or down, or by selecting a different slide in slide organizer 202 (e.g., using input interface 102, FIG. 1).

The user may customize objects 214 of slide 212, or the properties of slide 212 using various tools provided by the presentation application. Toolbar 220 may include several selectable icons 222, each operative to activate a different tool or function. For example, toolbar 220 may include an icon operative to activate a smart build tool. The smart build tool may allow a user to group several objects (e.g., images, tables, videos, etc.) and create animations (e.g., turntable animation, thumb-through animation, etc.) for the group. These animations may be made to appear cinematic by using hardware acceleration and other capabilities of 3D graphics circuitry (e.g., graphics circuitry 108, FIG. 1). In some embodiments, the animations may be rendered in real-time (e.g., using dedicated graphics circuitry, such as a GPU on a video card) when slides containing the animations are displayed or presented as part of a presentation.

In some embodiments, display 200 may include options window 230. Options window 230 may be moved and minimized/maximized independently of panes 202, 210, and 220, for example as an overlay over any of the panes. Options window 230 may include one or more user input mechanisms of any suitable type, such as drop down menus, radio buttons, and sliders. The presentation application may display options window 230 using any suitable approach, for example automatically (e.g., based on the presentation application context) or in response to a user instruction (e.g., in response to a user instruction to display options related to a selected object). The options available from options window 230 may vary based on the tool selected in toolbar 220 or by the type of object selected from slide 212. For example, window 230 may include different options if a table, graphic, or text is selected. It will be understood that although only one options window 230 is shown in FIG. 2, display 200 may include any suitable number of option windows 230.

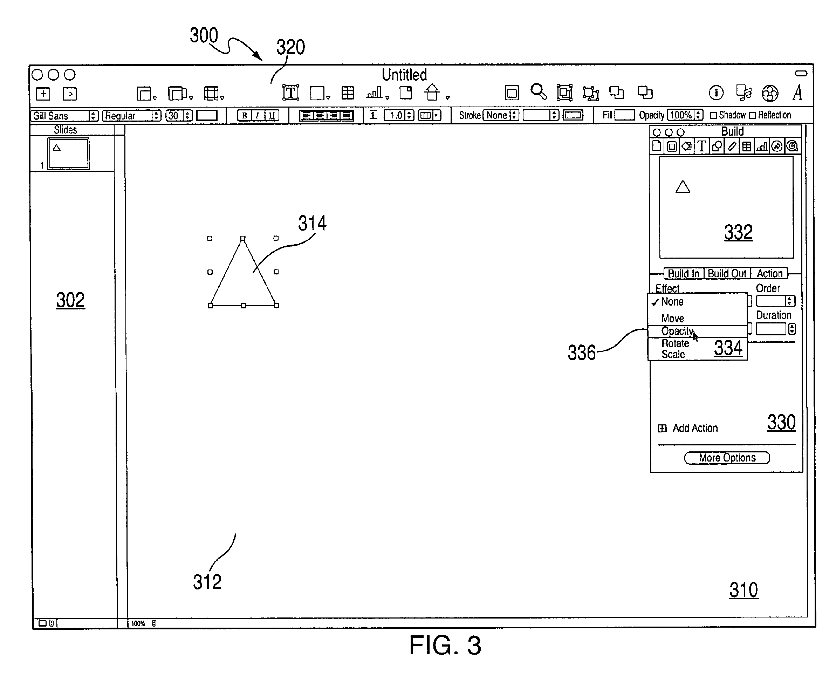

In some embodiments, the user may animate objects in slides of a presentation. For example, in response to receiving a user selection of an action build option (e.g., a user selection of an action build icon from toolbar 220), the presentation application may activate an action build mode by which a user may animate objects in a slide. FIG. 3 is an illustrative display of a presentation application screen in response to activating an action build mode in accordance with one embodiment of the invention. Display screen 300 may include slide organizer 302, slide canvas 310, and toolbar 320, which may include some or all of the features described in connection with slide organizer 202, slide canvas 210, and toolbar 220 (FIG. 2). Display 300 may include build inspector 330 with which the user may select an action build and set action build settings. Build inspector 330 may include preview window 332, which may include the objects displayed on slide 312. For example, preview window may include object 314 of slide 312.

Build inspector 330 may include selectable action builds 334. For example, build inspector 330 may include a drop down menu with selectable action builds 334. The user may select a particular action build by placing highlight region 336 over the action build, for example using a pointer controlled by an input interface (e.g., input interface 102, FIG. 1). In the example of FIG. 3, the available action builds may include Move, Opacity, Rotate and Scale. In some embodiments, the action builds may include computational heavy processes for which a graphics processor may be desirable.

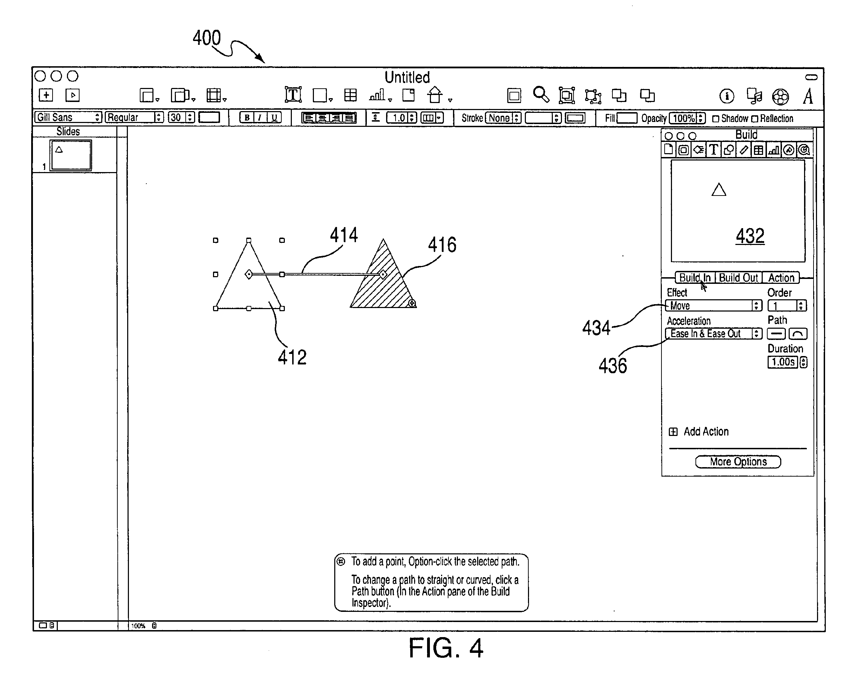

FIG. 4 is an illustrative display of a presentation application screen displayed in response to receiving a user selection of a Move build in accordance with one embodiment of the invention. Display 400 may include some or all of the panes and windows of the previous displays. In response to a user selection of a Move build (e.g., identified by Move option 434 in build inspector 430), the presentation application may display line 414 indicating the movement of object 412 during the presentation, and outline 416 indicating the final position of object 412. The user may select and move outline 416 to change the destination of object 412. In some embodiments, the user may change the shape of line 414 (e.g., and thus the path of object 412), for example by selecting and dragging one or more points of line 414.

The user may define settings controlling the movement of object 412 using options 436 of build inspector 430. The presentation application may include any suitable setting for the Move build, including for example the acceleration of the move, the duration of the move, and the type of path used (e.g., curved or linear). In some embodiments, the presentation application may preview the action build applied to object 412 using preview window 432. For example, after the user changes a setting of the Move build, or changes the path of the object (e.g., moves line 414), the presentation application may animate object 412 in preview window 432.

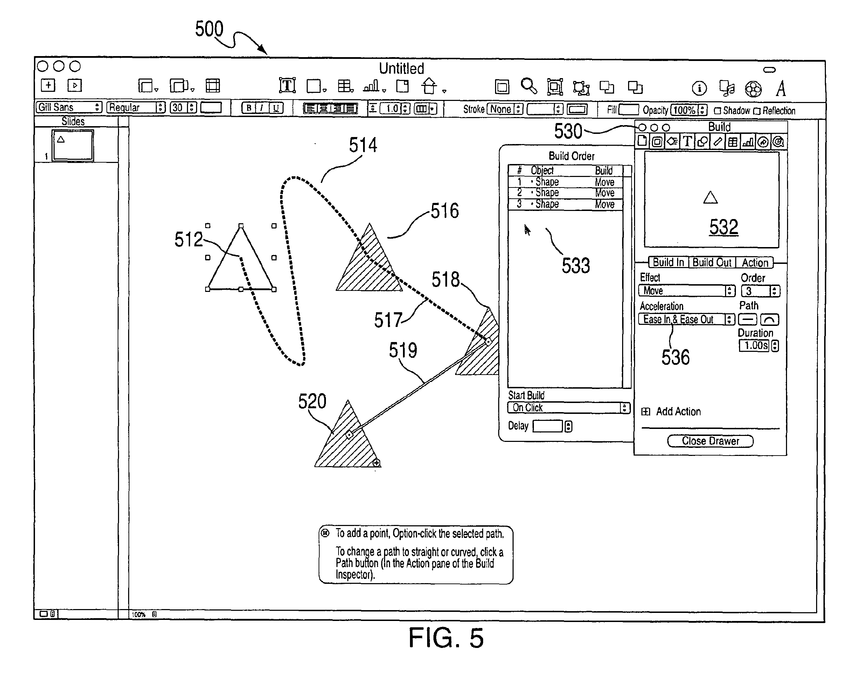

In some embodiments, the user may define several successive movements for an object. FIG. 5 is an illustrative display of a presentation application in which several Move builds are implemented in accordance with one embodiment of the invention. Display 500 may include some or all of the panes and windows of the previous displays. In display 500, the user has drawn a curved path 514 between object 512 and outline 516 (e.g., instead of straight line 414, FIG. 4). After moving to outline 516, object 512 may move to outline 518 over path 517, and then to outline 520 over path 519. The user may define settings for each successive Move build (e.g., the Move builds associated with the movements along each of paths 514, 517 and 519) by selecting the appropriate move build from build order window 533 and selecting options 536 in build inspector 530.

The presentation application may switch between Move builds using any suitable approach. In some embodiments, the user may define the manner in which the presentation application switches between Move builds using option 534 in build order window 533. For example, the user may direct the presentation application to move the object along a Move build (e.g., from outline 516 to outline 518) in response to a user click (e.g., an input from the input interface), as soon as the preceding build ends, after set delay (e.g., 1 second), simultaneously with the preceding build, or using any other suitable approach. In some embodiments, the presentation application may preview the successive Move builds in preview window 532. In some embodiments, a Move build in preview window 532 may not be performed until the user performs the required action to move from a previous Move build to the next Move build (e.g., a user click), or until the user selects the Move build in build order window 533.

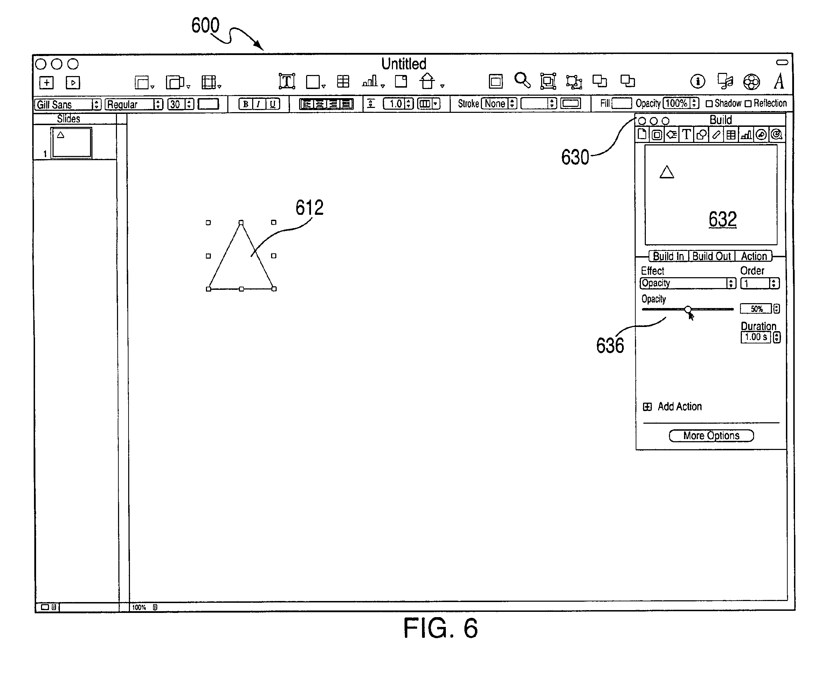

FIG. 6 is an illustrative display of a presentation application screen displayed in response to receiving a user selection of an Opacity build in accordance with one embodiment of the invention. Display 600 may include some or all of the panes and windows of the previous displays. In response to a user selection of an Opacity build, the presentation application may display opacity options 636 in build inspector 630. Opacity options 636 may include, for example, a slider indicating the amount by which the object 612 may become opaque. The presentation application may preview the change in opacity of object 612 in preview window 632.

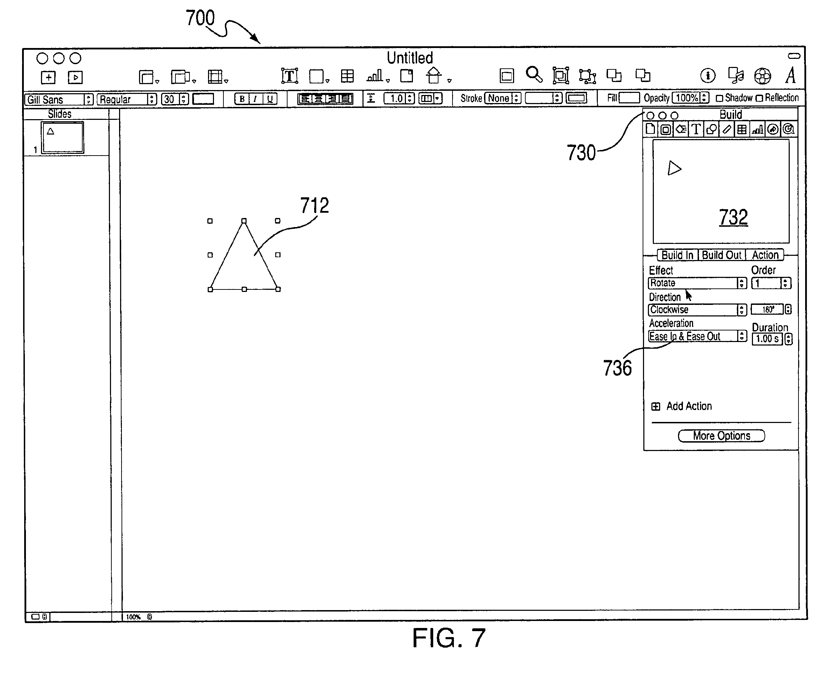

FIG. 7 is an illustrative display of a presentation application screen displayed in response to receiving a user selection of a Rotate build in accordance with one embodiment of the invention. Display 700 may include some or all of the panes and windows of the previous displays. In response to receiving a user selection of a Rotate build (e.g., in build inspector 730), the presentation application may display rotate options 736 in build inspector 730. The presentation application may display any suitable rotate options, including for example the rotation orientation, the rotation amount (e.g., in degrees), the rotation speed, and the acceleration (e.g., the manner in which the rotation takes place). The presentation application may preview the rotation of object 712 in preview window 732.

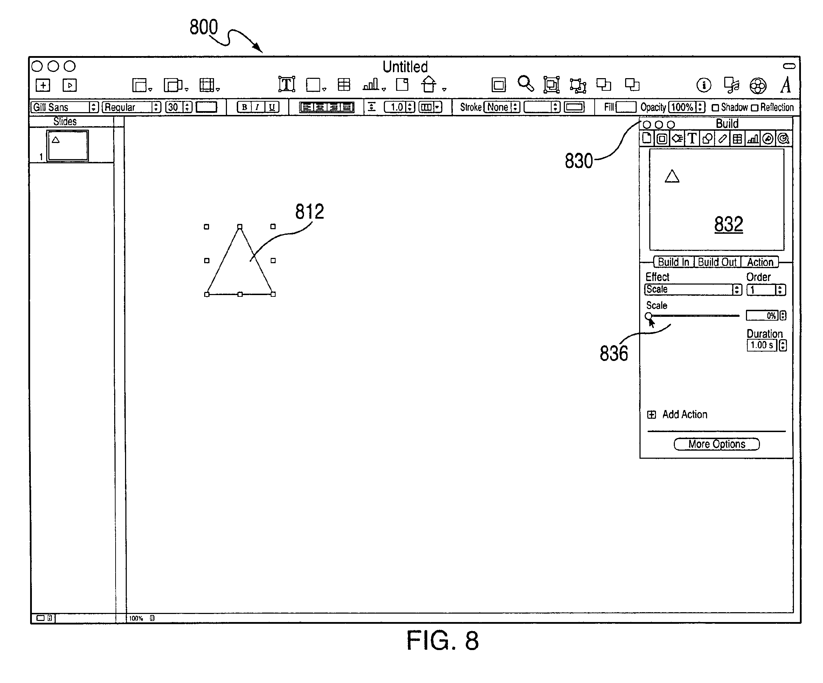

FIG. 8 is an illustrative display of a presentation application screen displayed in response to receiving a user selection of a Scale build in accordance with one embodiment of the invention. Display 800 may include some or all of the panes and windows of the previous displays. In response to a user selection of a Scale build, the presentation application may display scale options 836 in build inspector 830. Scale options 836 may include, for example, a slider indicating the amount by which to scale object 812 (e.g., ranging between 0% and 200% of the initial size of object 812). The presentation application may preview the change in scale of object 812 in preview window 832.

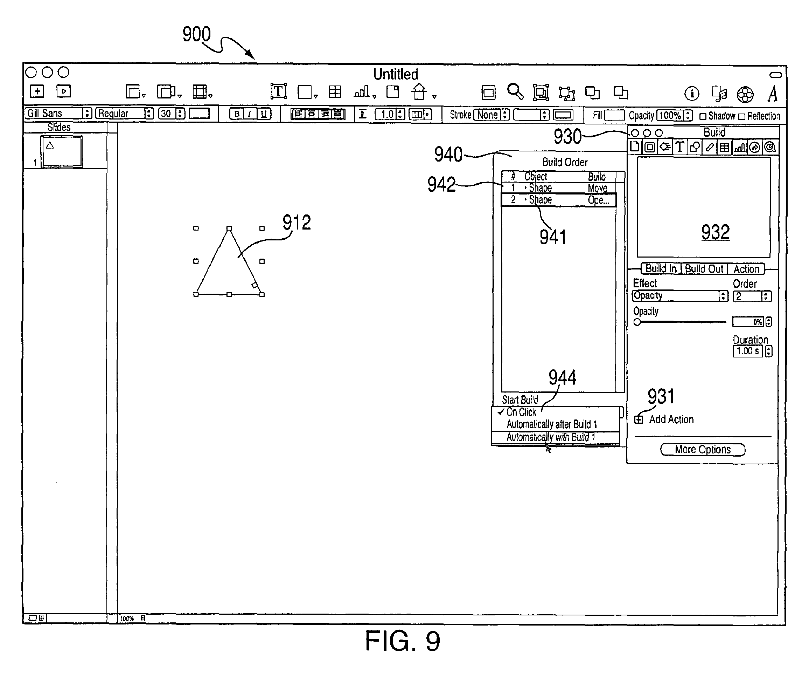

In some embodiments, the presentation application may combine several action builds to create a more complex animation. FIG. 9 is an illustrative display of a presentation application screen displayed in response to receiving a user selection of several builds in accordance with one embodiment of the invention. Display 900 may include some or all of the panes and windows of the previous displays. In response to a user instruction to apply at least two action builds to an object (e.g., object 912), the presentation application may display build order window 940 in addition to build inspector 930. The user may cause build order window 940 to be displayed using any suitable approach, including for example adding at least a second action build to a slide (e.g., using add action option 931), or selecting an object on a slide to which at least two action builds are applied (e.g., object 912).

Build order window 940 may include listings 942 of action builds applied to an object on a slide. Listings 942 may include any suitable information, including for example the object to which the action build applies, the type of action build, and the order in which the action builds are applied. The user may select a listing 942 using any suitable approach, including for example by placing highlight region 941 over a listing. Builds applied to an object of a slide may be applied in any suitable order and at any suitable time. Build order window 940 may include build timing option 944 for defining the time at which a build may be applied. For example, the user may select an option for a build to be applied in response to a user instruction (e.g., in response to a click), after the prior build has ended, at the same time as a prior build, a given amount of time after a prior build has ended (e.g., 5 seconds after the prior build has ended), or any other suitable option.

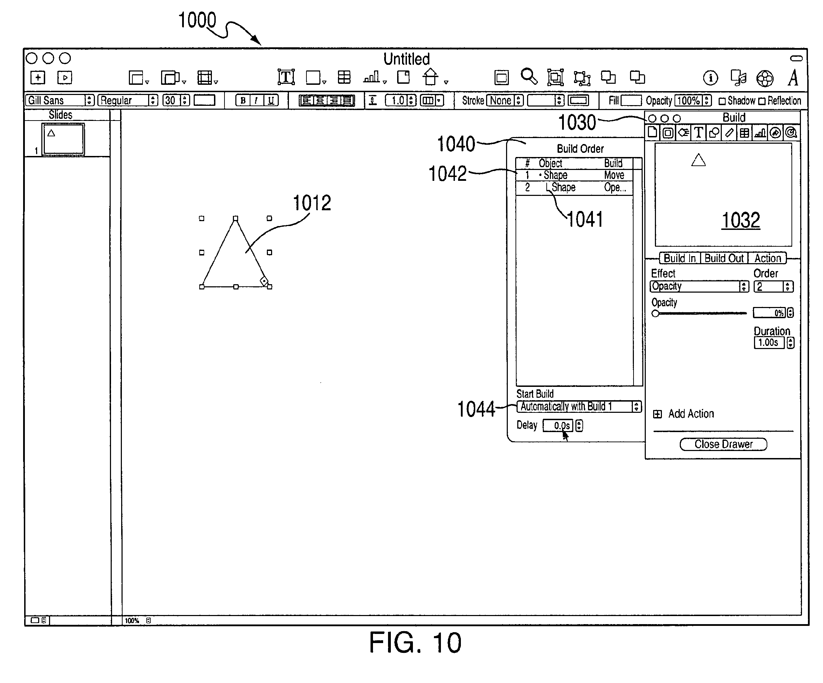

FIG. 10 is an illustrative display of a presentation application defining the settings applied to several builds in accordance with one embodiment of the invention. Display 1000 may include some or all of the panes and windows of the previous displays. In the example of FIG. 10, the user may have selected to perform a second action build (e.g., an Opaque build) at the same time as a first action build (e.g., a Move build). To indicate in listings 1042 of build order window 1040 that the builds will be performed simultaneously (e.g., as indicated by build timing option 1044), the presentation application may display icon 1041 tying the second action build to the first action build. The presentation application may preview the selected actions applied simultaneously to object 1012 in preview window 1032 of build inspector 1030.

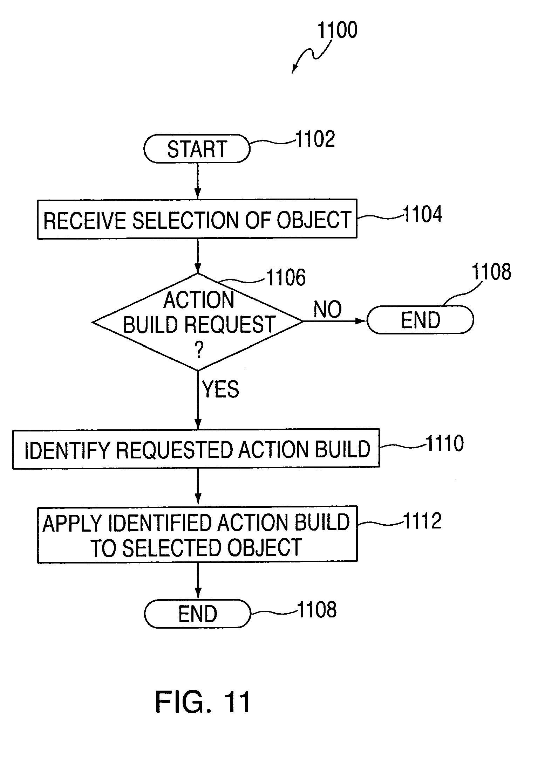

FIG. 11 is a flow chart of an illustrative process for applying an action build to an object of a slide in accordance with one embodiment of the invention. Process 1100 may begin at step 1102. At step 1104, the presentation application may receive a selection of an object. For example, the presentation application may receive a user selection of an object (e.g., using input interface 102, FIG. 1). As another example, the presentation interface may automatically select an object (e.g., automatically select a newly created object, or automatically select the most recently created object). At step 1106, the presentation application may determine whether the user requested to apply an action build to the selected object. For example, the presentation application may determine whether the user provided an instruction using an action build icon on toolbar 220 (FIG. 2) to access a build inspector (e.g., build inspector 330, FIG. 3). If the presentation application determines that the user did not request to apply an action build to the selected object, process 1100 may move to step 1108 and end.

If, at step 1106, the presentation application instead determines that the user provided an instruction to apply an action build to the selected object, process 1100 may move to step 1110. At step 1110, the presentation application may identify the requested action build. For example, the presentation application may determine whether the user selected one of a Move build, an Opacity build, a Rotate build or a Scale build. In some embodiments, the presentation application may also identify the settings applied to each identified action build. For example, the presentation application may determine the length of the action build, the rotation amount for a Rotation build, the amount to scale the object in the Scale build, or any other setting applicable to the requested action build. In some embodiments, the presentation application may determine the timing at which the requested application is to be applied. If several action builds are applied to an object, the presentation application may determine the order in which the build are applied, and the trigger between action builds (e.g., action builds applied sequentially or simultaneously, or action builds applied automatically or in response to a user click). In some embodiments, the presentation application may repeat step 1110 until all action builds that apply to the selected object are identified. At step 1112, the presentation application may apply the identified action build. For example, the presentation application may apply the identified action build with the settings identified at step 1110. In some embodiments, the electronic device may render the animation in real-time (e.g., while the presentation is being given), for example using graphics circuitry (e.g., a GPU). Process 1100 may then end at step 1108.

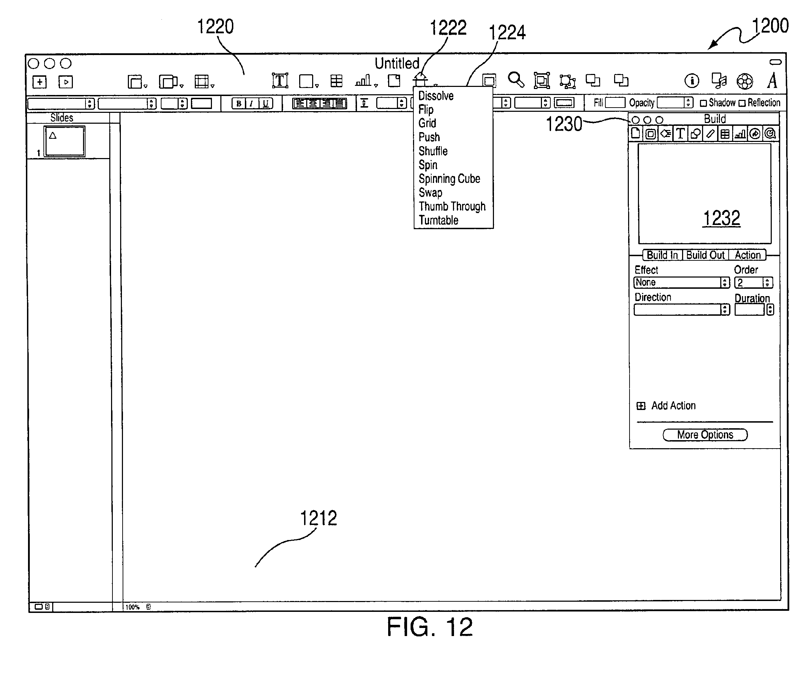

In some embodiments, the presentation application may include several complex animations that a user may apply to objects of a slide, referred to a smart builds. The smart builds may be constructed from long and complicated combinations of action builds. By providing smart builds, the presentation application may allow a user to perform more complex animations of objects without needing construct the complex animation from the available action builds. In some embodiments, the smart build animations may be rendered in real-time (e.g., using dedicated graphics circuitry, such as a GPU on a video card) when slides containing the animations are displayed or presented as part of a presentation. FIG. 12 is an illustrative display of a presentation application screen displayed in response to activating a smart build mode in accordance with one embodiment of the invention. Display 1200 may include some or all of the panes and windows of the previous displays. Display 1200 may include build inspector 1230 with which the user may select a smart build and set smart build settings. Build inspector 1230 may include preview window 1232, which may include the objects displayed on slide 1212. In some embodiments, the user may access available smart builds by selecting a smart build icon (e.g., icon 1222) from toolbar 1220.

In response to selecting a smart build icon, the presentation application display menu 1224 of available smart builds. The presentation application may make any suitable smart build available to the user. In the example of FIG. 12, the smart builds available to the user may include Dissolve, Flip, Grid, Push, Shuffle, Spin, Spinning Cube, Swap, Thumb Through and Turntable. The user may select any smart build from menu 1224 to include it in slide 1212.

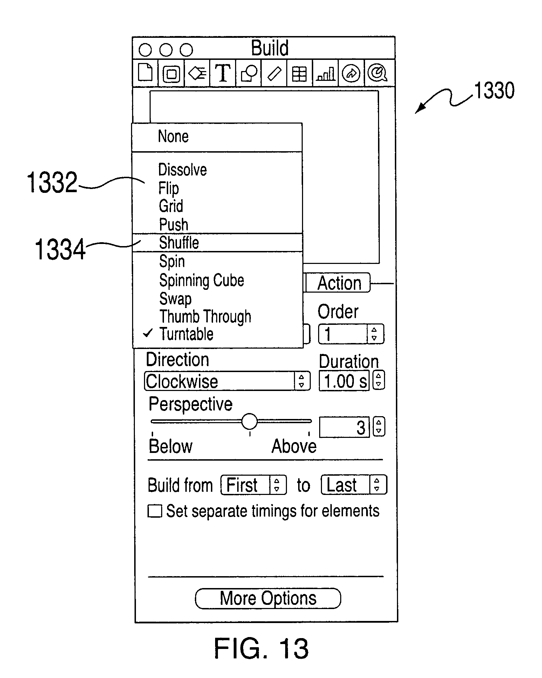

FIG. 13 is an illustrative display of a build inspector of a presentation application screen displayed in response to a user selection of a smart build menu in accordance with one embodiment of the invention. Build inspector 1330 may include menu 1332 of smart builds available to the user. The user may select a smart build by placing highlight region 1334 over a smart build of menu 1332. In some embodiments, the user may access smart builds by using one of menu 1224 (FIG. 12) and menu 1332 (FIG. 13).

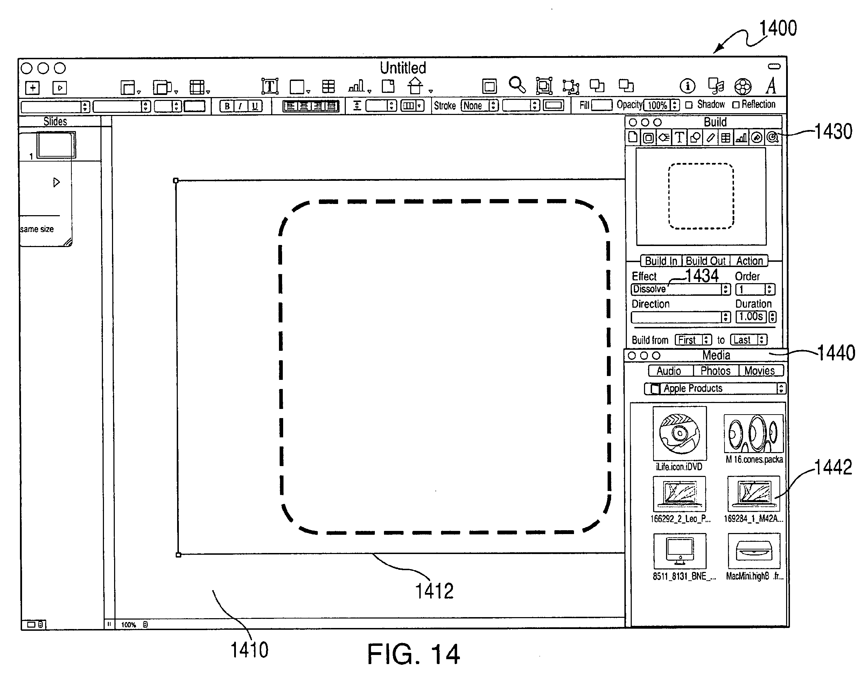

FIG. 14 is an illustrative display of a presentation application screen displayed in response to receiving a user selection of a Dissolve smart build in accordance with one embodiment of the invention. Display 1400 may include slide canvas 1410 in which outline 1412 of the smart build may be displayed. Display 1400 may include build inspector 1430 in which the smart build may be identified or selected (e.g., using menu 1434). Build inspector 1430 may include preview window 1432, which may include a representation of outline 1412 of the selected smart build.

The user may select media objects to be placed in the smart build using any suitable approach, including for example selecting media objects from a pop-up media window (e.g., media objects 1442 from pop-up media window 1440). The presentation application may apply a smart build to any suitable media object or combination of media objects, including for example, text, audio, images, video (e.g., movies), or combinations thereof. The user may select any suitable number of media objects to add to the smart build. If the smart build has a maximum, the presentation application may prevent the user from adding media objects beyond the maximum number allowed.

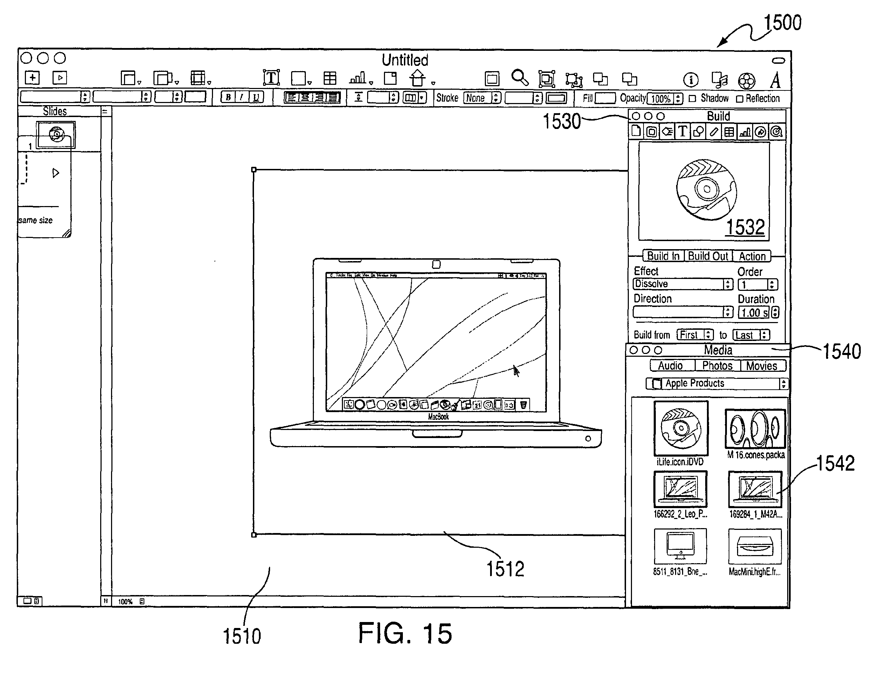

FIG. 15 is an illustrative display of a presentation application screen displayed in response to receiving a user selection of media objects for a Dissolve smart build in accordance with one embodiment of the invention. Display 1500 may include media window 1540 which may identify media objects selected by the user for the selected smart build. In the example, of FIG. 15, the media objects 1542 selected for the smart build may be identified by a highlight region. At least one of the selected media objects may be displayed within outline 1512 of slide canvas 1510. Build inspector 1530 of display 1500 may include preview window 1532 in which the media objects selected for the smart build may be displayed.

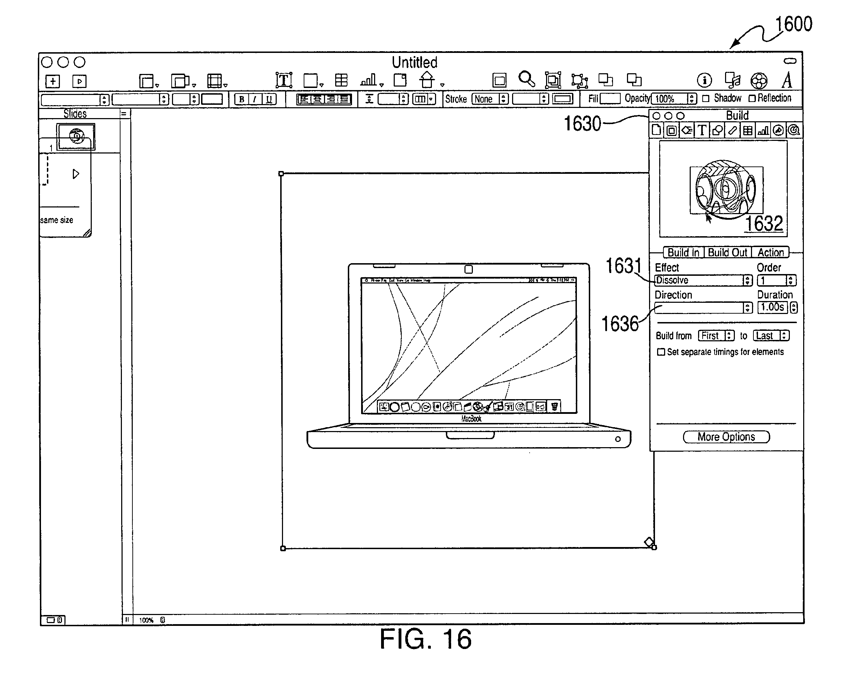

FIG. 16 is an illustrative display of a presentation application screen that includes Dissolve smart build options in accordance with one embodiment of the invention. Display 1600 may include some or all of the panes and windows of the previous displays. In response to receiving a user selection of a Dissolve smart build (e.g., in menu 1631 of build inspector 1630), the presentation application may display dissolve options 1636 in build inspector 1630. The presentation application may display any suitable dissolve options, including for example the order in which to dissolve media objects, the duration of the build, or any other suitable option. The presentation application may preview the application of the Dissolve smart build to the selected media objects in preview window 1632 (e.g., preview the animation by which media objects are dissolved and replaced).

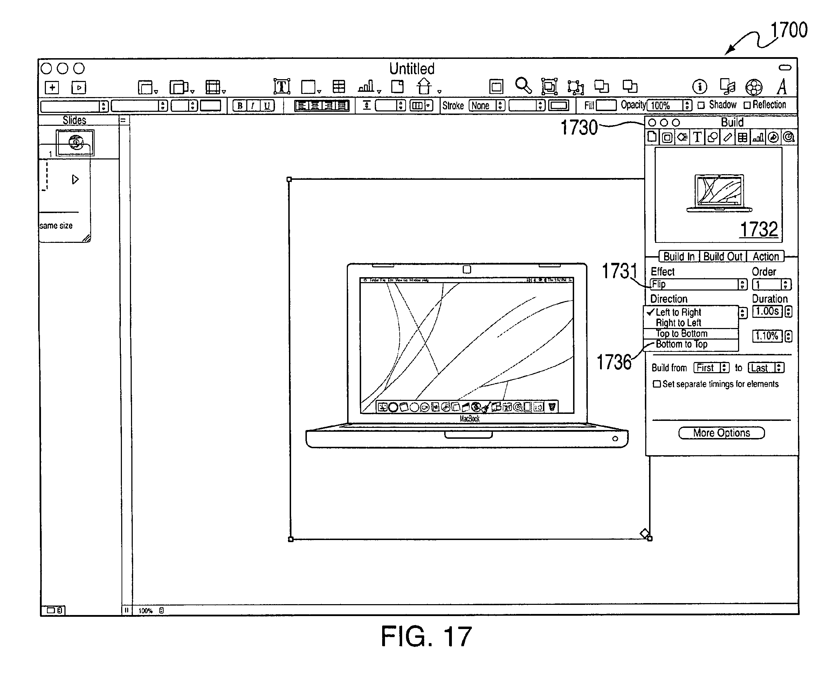

FIG. 17 is an illustrative display of a presentation application screen displayed in response to receiving a user selection of a Flip smart build in accordance with one embodiment of the invention. Display 1700 may include some or all of the panes and windows of the previous displays. In response to receiving a user selection of a Flip smart build (e.g., in menu 1731 of build inspector 1730), the presentation application may display flip options 1736. The presentation application may display any suitable flip options, including for example the direction in which to flip media objects (e.g., left to right, right to left, top to bottom, or bottom to top), the duration of the build, the scale of each media object (e.g., such that the size of the media object decreases as it rotates towards its side), or any other suitable option.

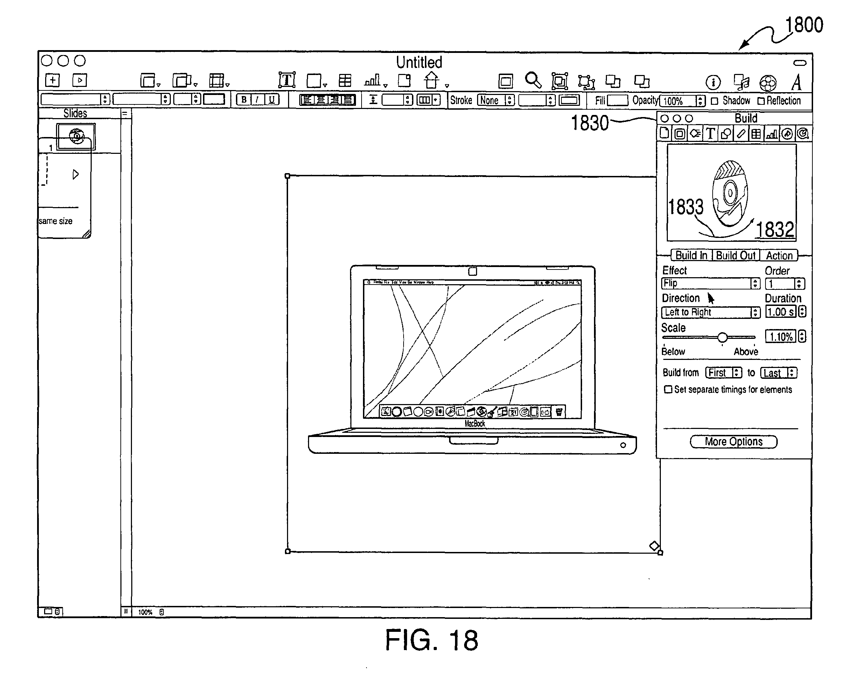

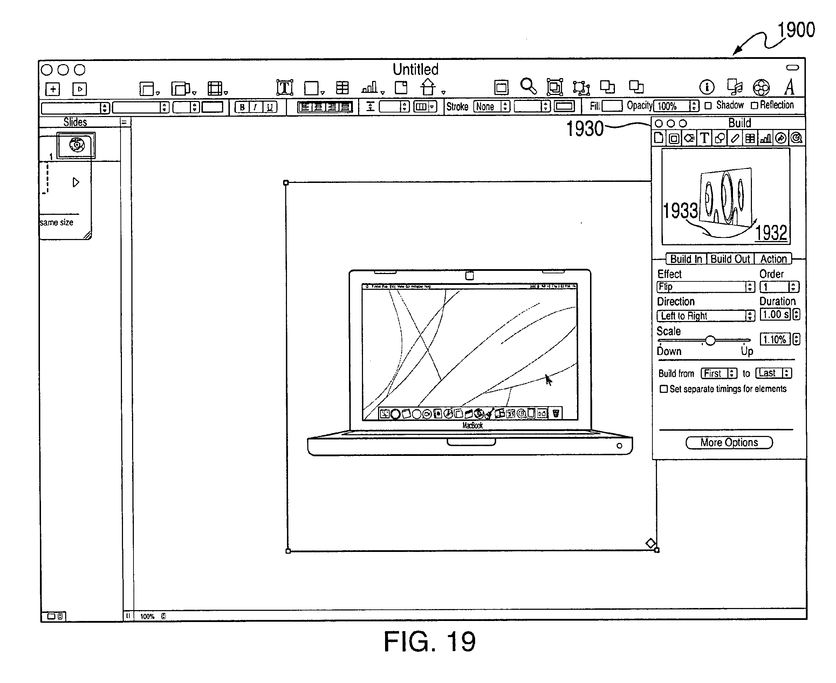

FIGS. 18 and 19 are illustrative displays of presentation application screens showing the Flip smart build applied to media objects in a preview window in accordance with one embodiment of the invention. Displays 1800 and 1900 may include some or all of the panes and windows of the previous displays. Displays 1800 and 1900 may include build inspector 1830 with preview window 1832 and build inspector 1930 with preview window 1932, respectively. As shown in preview window 1832, media object 1834 may rotate such that its angle relative to the user may decrease until the side of the media object faces the user (e.g., in the direction identified by arrow 1833). The presentation application may then switch to the next media object of the flip smart build, and rotate media object 1934 such that its angle relative to the user increases (e.g., in the direction identified by arrow 1933), and subsequently decreases once media object 1934 rotates past the point at which it appears to be flat against display 1900.

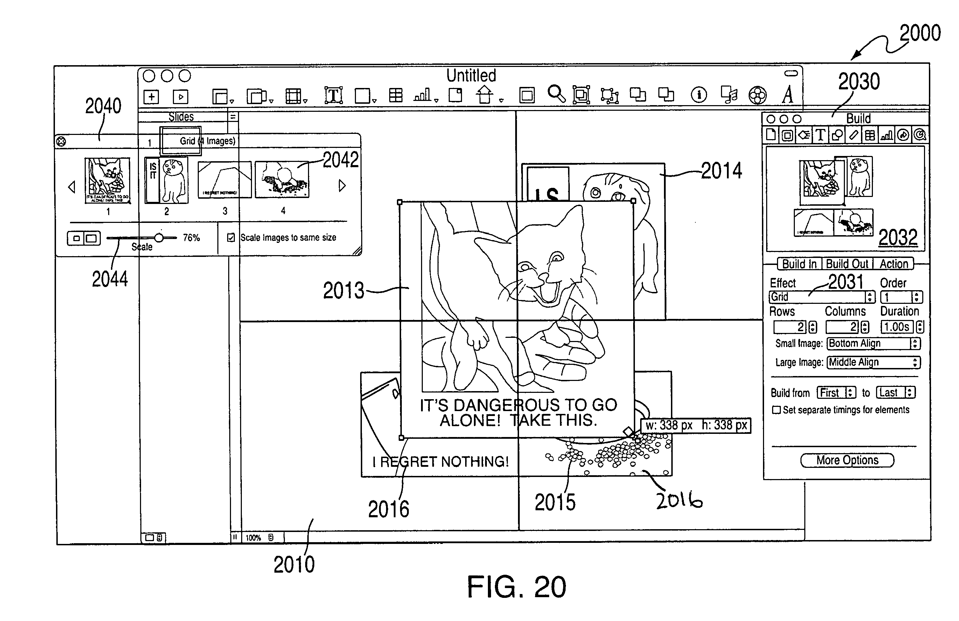

FIG. 20 is an illustrative display of a presentation application screen displayed in response to receiving a user selection of a Grid smart build in accordance with one embodiment of the invention. Display 2000 may include some or all of the panes and windows of the previous displays. In response to receiving a user selection of a Grid smart build (e.g., in menu 2031 of build inspector 2030), the presentation application may display grid options 2036. The presentation application may display any suitable grid options, including for example the number of rows and columns of media objects in the grid, the duration of the animation for each media object, the alignment of each media object when it is brought forward and when it is left in the background, the order in which the Grid smart build is applied to the media objects, or any other suitable option.

In some embodiments, the presentation application may display grid outline 2012 on canvas slide 2010. Grid outline 2012 may include boxes or other markings for placing media objects 2013, 2014, 2015 and 2016 within grid 2012. In some embodiments, the presentation may bring one of the media objects to which the Grid smart build is applied (e.g., media object 2013). The user may resize media object 2013 (e.g., by selecting and dragging a side or corner of media object 2013) to set the size at which each media object will be displayed when it is brought to the foreground during the Grid smart build animation. In some embodiments, the user may select and resize a media object displayed in the background (e.g., select and resize one of media objects 2014, 2015 and 2016). In some embodiments, the user may move media object 2013 (e.g., by selecting and dragging media object 2013) to define the location on the screen at which the media object will be displayed when it is brought to the foreground during the Grid smart build animation.

In some embodiments, display 2000 may include head's up display (HUD) 2040. HUD 2040 may include representations 2042 (e.g., thumbnails) of the media objects to which the selected smart build is applied. The user may use HUD 2040 to manipulate or modify media objects 2013, 2014, 2015 and 2016 without needing to select the media objects on canvas slide 2010. For example, the user may re-order the media objects of the smart build by changing the order of representations 2042. As another example, HUD 2040 may include scale option 2044 for changing the scale of each media object (e.g., foreground media objects and background media objects). HUD 2040 may include any other suitable object for modifying or manipulating one or more of the media objects to which the mart build is applied. Although HUD 2040 or a similar HUD is not displayed in every presentation application display screen describing a smart build or smart build feature, it will be understood that such a HUD may be included in any of the presentation application display screens.

Once the user has set the Grid smart build settings and selected media objects for the smart build, the presentation application may display a preview of the Grid smart build animation in preview window 2032. In the preview, the presentation application may cycle through the selected media objects, and sequentially bring each media object into the foreground while increasing the size of the media object (e.g., to bring it into focus), then return the media object to the background before selecting the next media object.

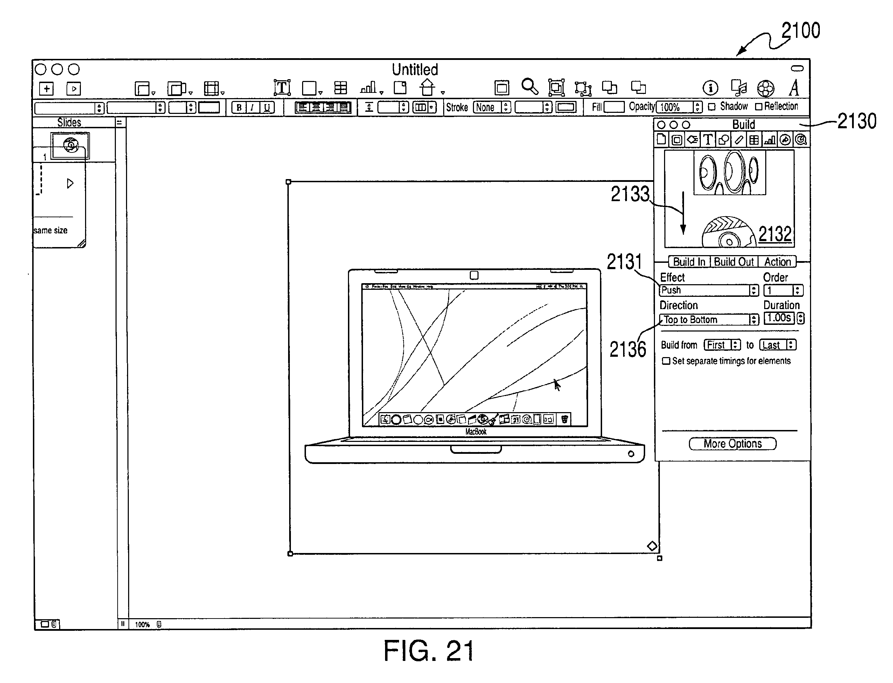

FIG. 21 is an illustrative display of a presentation application screen displayed in response to receiving a user selection of a Push smart build in accordance with one embodiment of the invention. Display 2100 may include some or all of the panes and windows of the previous displays. In response to receiving a user selection of a Push smart build (e.g., in menu 2131 of build inspector 2130), the presentation application may display push options 2136 in build inspector 2130. The presentation application may display any suitable push options, including for example the order in which to display media objects, the direction in which to push media objects to replace the currently displayed media object (e.g., left to right, right to left, top to bottom, or bottom to top), the duration of the build, or any other suitable option. The presentation application may preview the application of the Push smart build to the selected media objects in preview window 2132 (e.g., preview the animation by which media objects are pushed off the edge of the slide and replaced). In the example of FIG. 21, the speakers may push the DVD down and off of the slide in preview window 2132 (e.g., in the direction identified by arrow 2133).

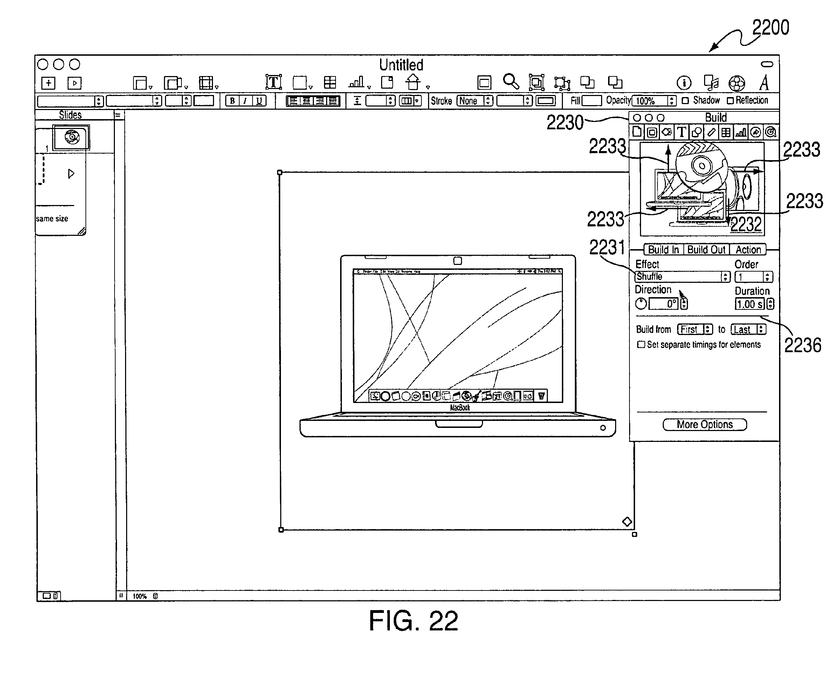

FIG. 22 is an illustrative display of a presentation application screen displayed in response to receiving a user selection of a Shuffle smart build in accordance with one embodiment of the invention. Display 2200 may include some or all of the panes and windows of the previous displays. In response to receiving a user selection of a Shuffle smart build (e.g., in menu 2231 of build inspector 2230), the presentation application may display shuffle options 2236 in build inspector 2230. The presentation application may display any suitable shuffle options, including for example the angle at which to expand the media objects during the shuffle animation (e.g., expand media objects towards the center of the sides of the slide, or towards the corners of the slide), the order in which to display media objects, the duration of the build, or any other suitable option. The presentation application may preview the application of the shuffle smart build to the selected media objects in preview window 2232.

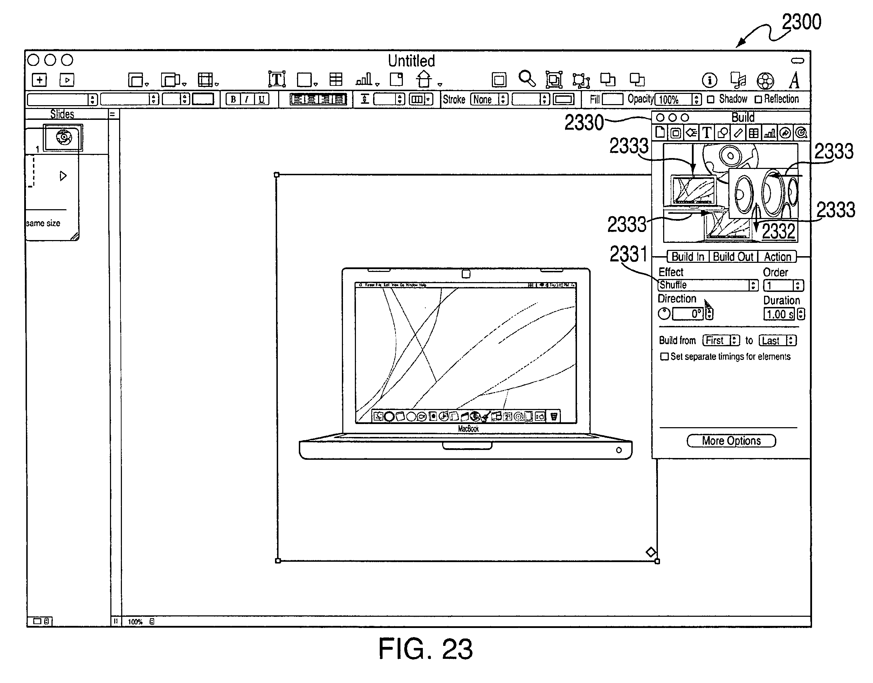

In the example of FIG. 22, preview window 2232 may display the DVD media object in the foreground. As the animation progresses, the DVD and other media objects may be displaced towards the borders of the slide (e.g., towards the borders of preview window 2232, in the directions identified by arrows 2233), and return with a different media object in the foreground. FIG. 23 is an illustrative display of a presentation application screen showing a Shuffle smart build animation in accordance with one embodiment of the invention. In some embodiments, display 2300 may be display 2200 as the Shuffle smart build animation shown in preview window 2332 of build inspector 2330 nears completion. As shown in preview window 2332, the media objects may return towards the center of the slide (e.g., the center of preview window 2332, in the directions identified by arrows 2333) such that a new media object is in the foreground (e.g., the speakers entering the screen from the right are in the foreground).

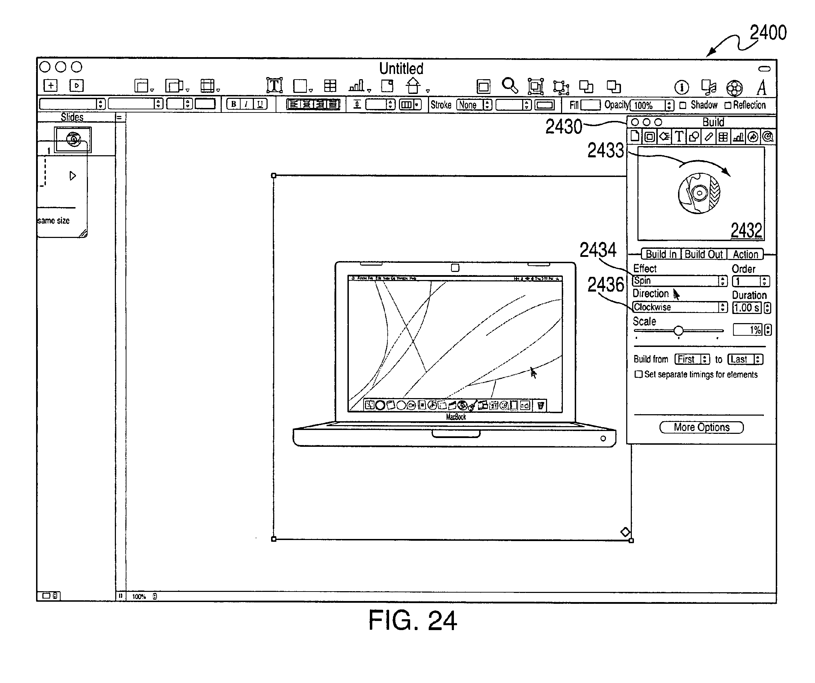

FIG. 24 is an illustrative display of a presentation application screen displayed in response to receiving a user selection of a Spin smart build in accordance with one embodiment of the invention. Display 2400 may include some or all of the panes and windows of the previous displays. In response to receiving a user selection of a Spin smart build (e.g., in menu 2431 of build inspector 2430), the presentation application may display spin options 2436 in build inspector 2430. The presentation application may display any suitable spin options, including for example the spin direction (e.g., clockwise or counterclockwise), the order in which to display media objects, the duration of the build (e.g., how fast and how long each object spins), the scale of the media object (e.g., how much does the media object decrease or increase in size as it spins), or any other suitable option. The presentation application may preview the application of the spin smart build to the selected media objects in preview window 2432.

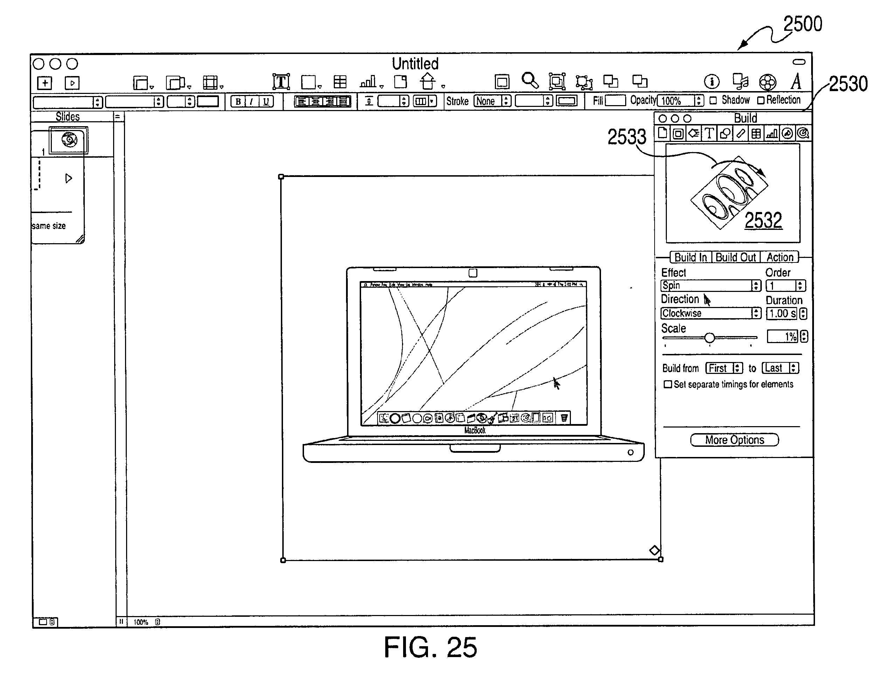

In the example of FIG. 24, preview window 2432 may display the DVD media object, and rotate the DVD (e.g., in the direction identified by arrow 2433) while decreasing its size (e.g., giving the impression that the DVD is moving into the screen). As the animation progresses, the DVD may reach its ultimate size (e.g., a minimal or maximal size, depending on the scale used) determined by the length of the animation and the scale (e.g., set in options 2436), and be replaced by the next media object, which may spin and grow (e.g., giving the impression that the next media object is approaching the user from the screen). FIG. 25 is an illustrative display of a presentation application screen showing a Spin smart build animation in accordance with one embodiment of the invention. In some embodiments, display 2500 may be display 2400 as the Spin smart build animation shown in preview window 2532 of build inspector 2530 nears completion. As shown in preview window 2532, the next media object (e.g., the speakers) may spin (e.g., in the direction identified by arrow 2533) and grow as it replaced the previous media object (e.g., the DVD).

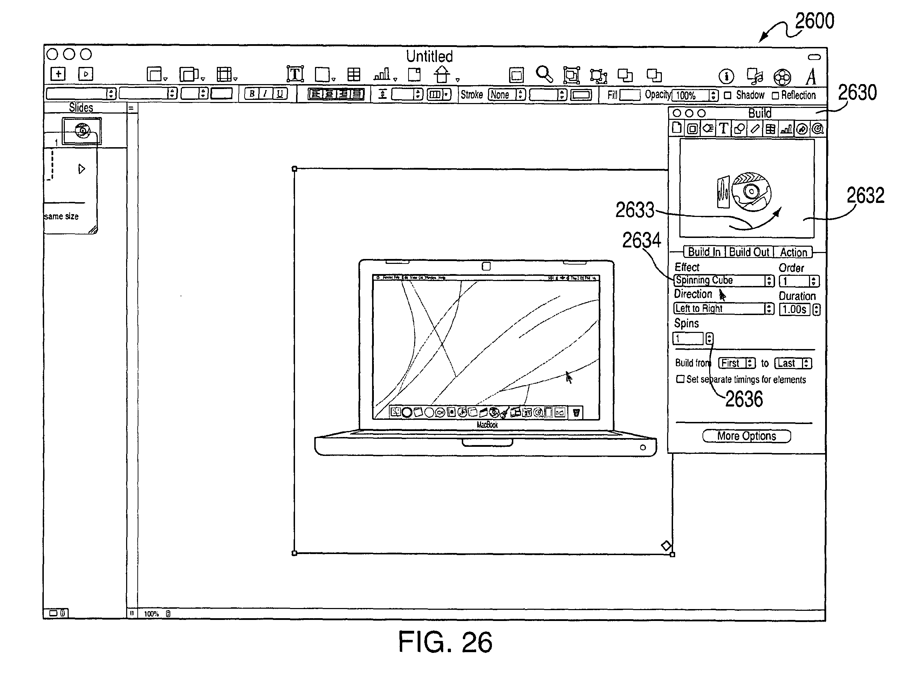

FIG. 26 is an illustrative display of a presentation application screen displayed in response to receiving a user selection of a Spinning Cube smart build in accordance with one embodiment of the invention. Display 2600 may include some or all of the panes and windows of the previous displays. In response to receiving a user selection of a Spinning Cube smart build (e.g., in menu 2631 of build inspector 2630), the presentation application may display spinning cube options 2636 in build inspector 2630. The presentation application may display any suitable spinning cube options, including for example the spin direction (e.g., left or right or right to left), the number of cube spins before displaying a media object, the order in which to display media objects, the duration of the build (e.g., how fast and how long the cube spins), or any other suitable option. The presentation application may preview the application of the spinning cube smart build to the selected media objects in preview window 2632. Although the smart build is called Spinning Cube, the number of media objects for which the Spinning Cube smart build may apply is not limited to four, six, or any other number related to a cube. Instead, any suitable number of media objects may be used.

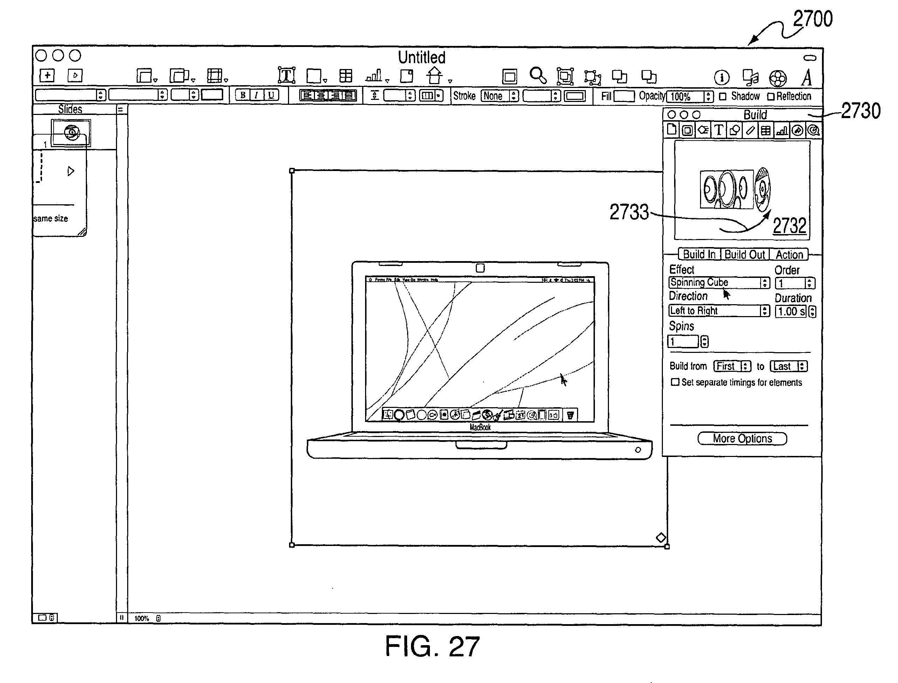

In the example of FIG. 26, preview window 2632 may display the face of the cube that includes the DVD media object, and spinning the cube (e.g., in the direction identified by arrow 2633). In some embodiments, the presentation application may simultaneously scale the cube (e.g., reduce its size) as the cube spins. As the animation progresses, the spinning cube may reach its maximum number of revolutions, slow down, and display the media object of the next face of the cube. FIG. 27 is an illustrative display of a presentation application screen showing a Spinning Cube smart build animation in accordance with one embodiment of the invention. In some embodiments, display 2700 may be display 2600 as the Spinning Cube smart build animation shown in preview window 2732 of build inspector 2730 nears completion. As shown in preview window 2732, the media object of the next face of the cube (e.g., the speakers) may appear as the cube slows down its spin (e.g., the cube spinning in the direction identified by arrow 2733). In some embodiments, the presentation application may scale up the next face of the cube.

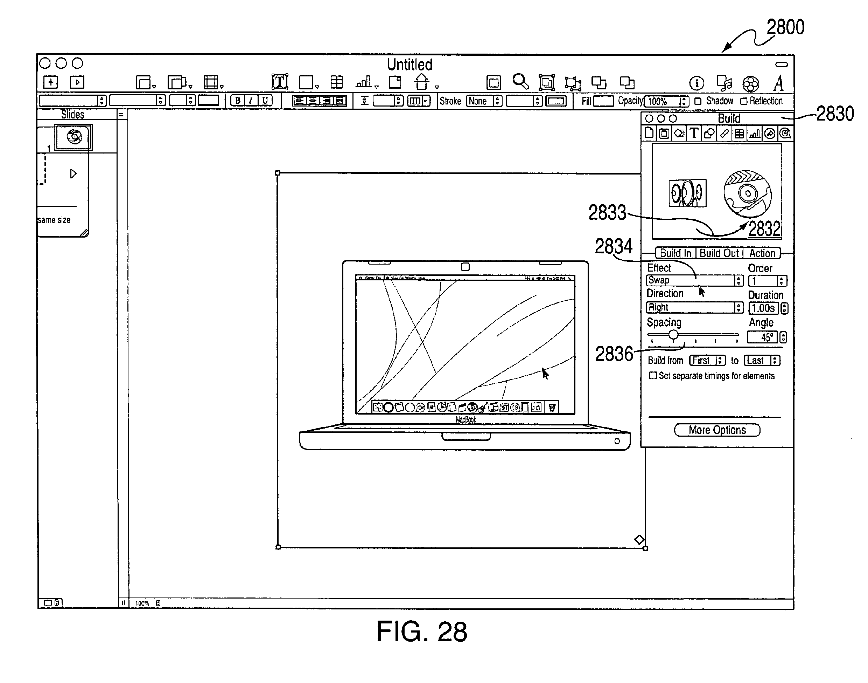

FIG. 28 is an illustrative display of a presentation application screen displayed in response to receiving a user selection of a Swap smart build in accordance with one embodiment of the invention. Display 2800 may include some or all of the panes and windows of the previous displays. In response to receiving a user selection of a Swap smart build (e.g., in menu 2831 of build inspector 2830), the presentation application may display swap options 2836 in build inspector 2830. The presentation application may display any suitable swap options, including for example the swap direction (e.g., left or right or right to left), the spacing between media objects during the swap, the angle of the plane in which the swap occurs, the order in which to display media objects, the duration of the build (e.g., how long to swap from one media object to another), or any other suitable option. The presentation application may preview the application of the Swap smart build to the selected media objects in preview window 2832.

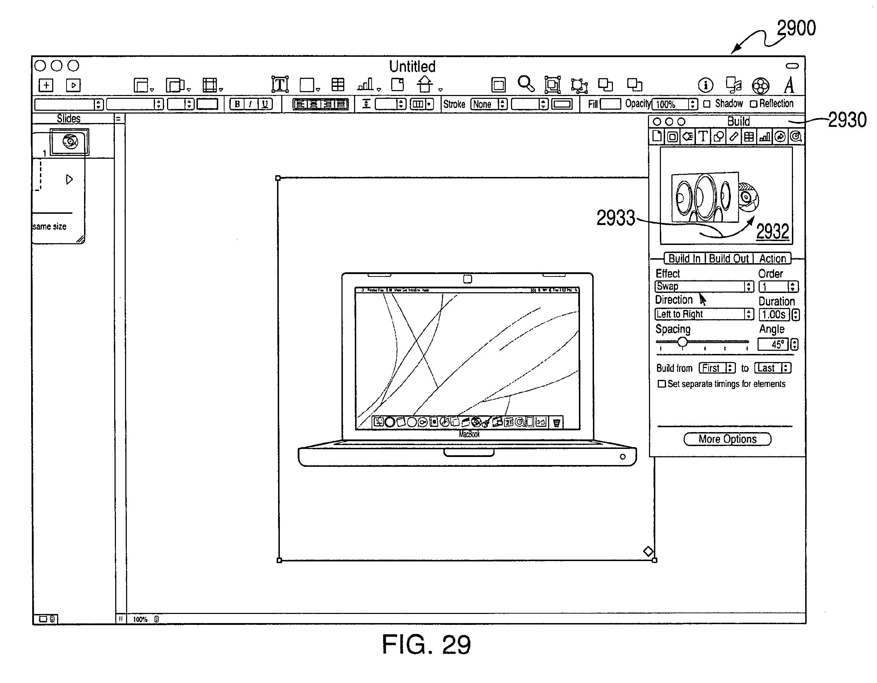

In the example of FIG. 28, preview window 2832 may display the a media object (e.g., the DVD), and rotate the media object (e.g., in the direction identified by arrow 2833) as if it were on the border of a circle that includes only the current media object and the next media object (as opposed to the Turntable smart build, in which every media object is simultaneously on the border of a circle). In some embodiments, the presentation application may simultaneously scale the media object as it is swapped (e.g., to reduce its size when it is not in the foreground). As the animation progresses, the presentation application may swap out the previous media object, and swap in the new media object. FIG. 29 is an illustrative display of a presentation application screen showing a Swap smart build animation in accordance with one embodiment of the invention. In some embodiments, display 2900 may be display 2800 as the Swap smart build animation shown in preview window 2932 of build inspector 2930 nears completion. As shown in preview window 2832, the next media object to display (e.g., the speakers) may appear as the presentation application swaps in the media object (e.g., rotates in the media object in the direction identified by arrow 2933). In some embodiments, the presentation application may scale up the media object as it is swapped in.

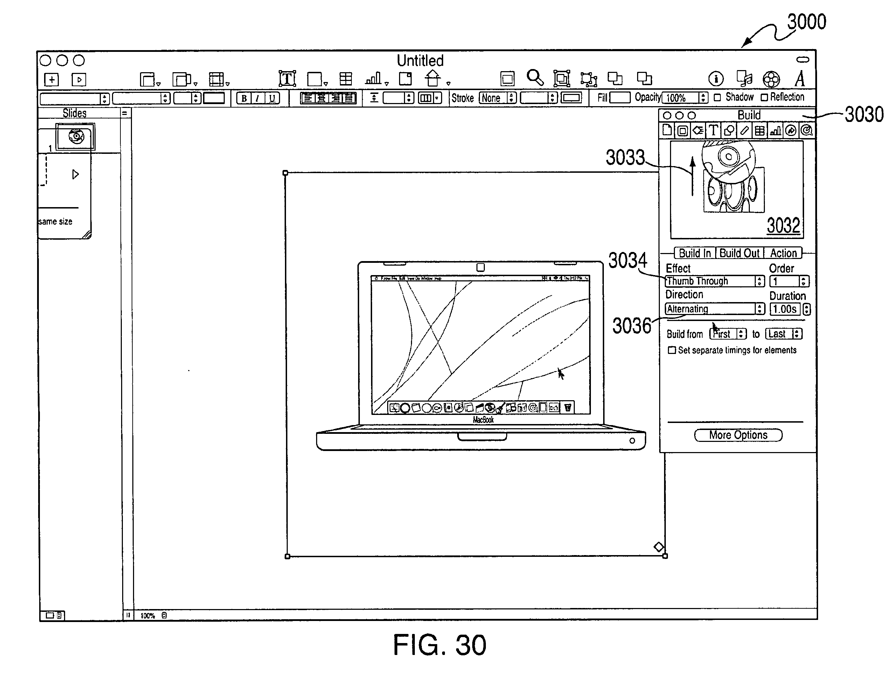

FIG. 30 is an illustrative display of a presentation application screen displayed in response to receiving a user selection of a Thumb Through smart build in accordance with one embodiment of the invention. Display 3000 may include some or all of the panes and windows of the previous displays. In response to receiving a user selection of a Thumb Through smart build (e.g., in menu 3031 of build inspector 3030), the presentation application may display thumb through options 3036 in build inspector 3030. The presentation application may display any suitable thumb through options, including for example the thumb through direction (e.g., left, right or both), the order in which to display media objects, the duration of the build (e.g., how long to thumb through from one media object to another), or any other suitable option. The presentation application may preview the application of the Thumb Through smart build to the selected media objects in preview window 3032.

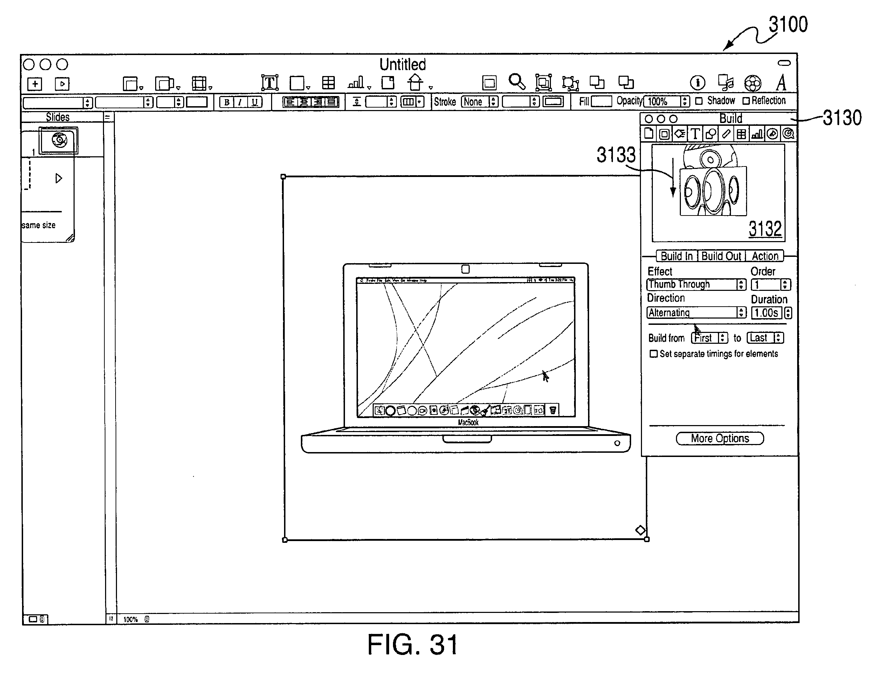

In the example of FIG. 30, preview window 3032 may display the a media object (e.g., the DVD), and thumb up the media object so that it may pass over the next media object displayed by the presentation application (e.g., in the direction identified by arrow 3033). In some embodiments, the presentation application may simultaneously scale the media object as it is swapped (e.g., to reduce its size when it is not in the foreground). As the animation progresses, the presentation application may increase the size of the new media object over which the prior media object thumbed. FIG. 31 is an illustrative display of a presentation application screen showing a Thumb Through smart build animation in accordance with one embodiment of the invention. In some embodiments, display 3100 may be display 3000 as the Thumb Through smart build animation shown in preview window 3132 of build inspector 3130 nears completion. As shown in preview window 3032, the next media object to display (e.g., the speakers) may appear as the presentation application thumbs the prior media object over and behind the next media object (e.g., moves the prior media object, here the DVD, in the direction identified by arrow 3133). In some embodiments, the presentation application may scale up the media object as it appears in front of the previous media object.

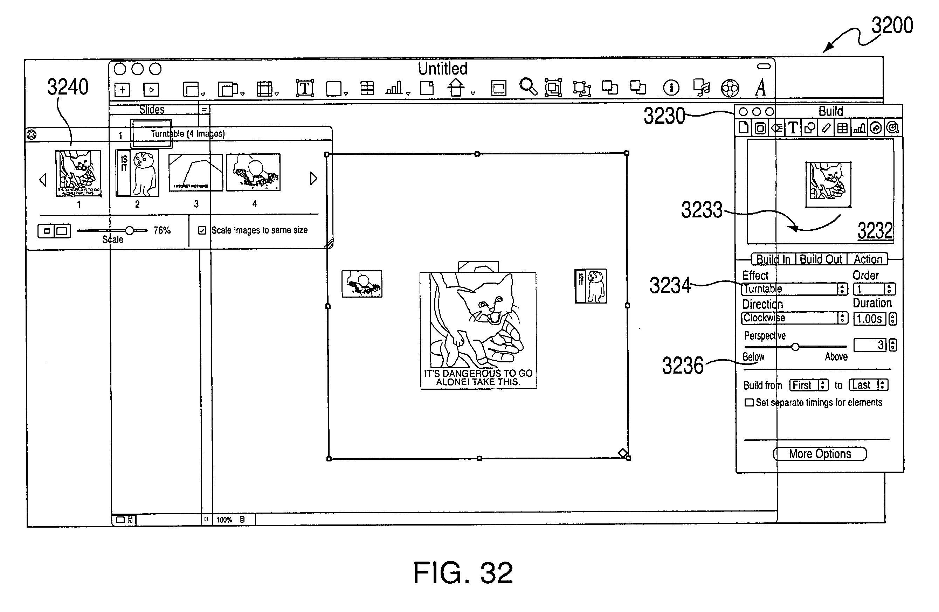

FIG. 32 is an illustrative display of a presentation application screen displayed in response to receiving a user selection of a Turntable smart build in accordance with one embodiment of the invention. Display 3200 may include some or all of the panes and windows of the previous displays. In response to receiving a user selection of a Turntable smart build (e.g., in menu 3231 of build inspector 3230), the presentation application may display turntable options 3236 in build inspector 3230. The presentation application may display any suitable turntable options, including for example the rotation direction (e.g., clockwise or counterclockwise), the plane in which the rotation takes place (e.g., the plane relative to the user's perspective), the order in which to display media objects, the duration of the build (e.g., how long to rotate from one media object to another), or any other suitable option. In some embodiments, display 3200 may include HUD 3240. The presentation application may preview the application of the Thumb Through smart build to the selected media objects in preview window 3232.

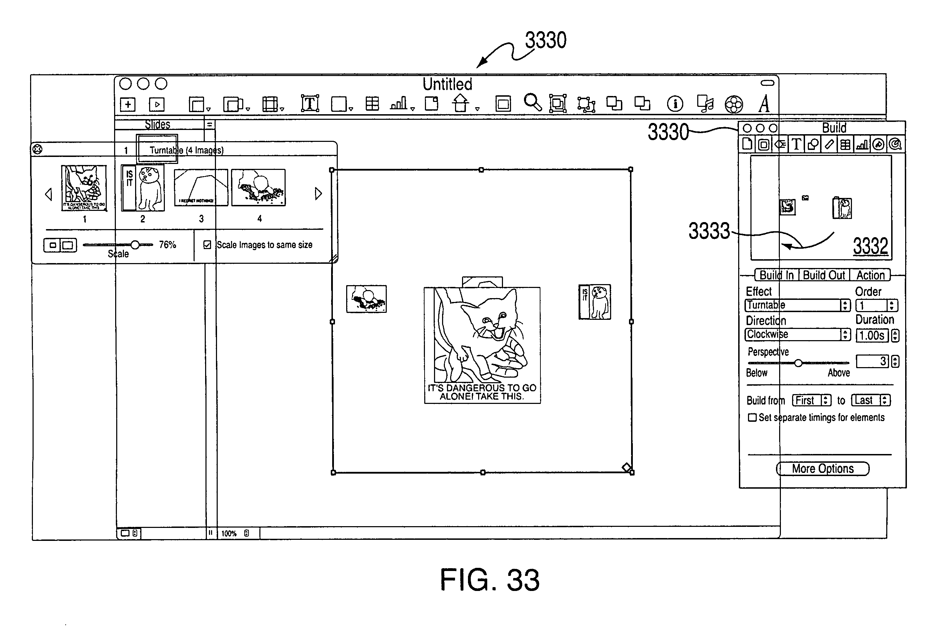

In the example of FIG. 32, preview window 3232 may display the a media object (e.g., a first cat), and rotate the media object as if it were on a turntable with the other media objects (e.g., in the direction identified by arrow 3233). In some embodiments, the presentation application may simultaneously scale the media object as it is rotated (e.g., to reduce its size when it is not in the foreground) to give the user a three-dimensional effect. As the animation progresses, the presentation application may increase the size of the new media object that is rotated in the place of the prior media object. FIG. 33 is an illustrative display of a presentation application screen showing a Turntable smart build animation in accordance with one embodiment of the invention. In some embodiments, display 3300 may be display 3200 as the Turntable smart build animation shown in preview window 3332 of build inspector 3330 nears completion. As shown in preview window 3232, the next media object to display (e.g., a second cat) may appear as the presentation application rotates the next media object into the place of the previous media object (e.g., rotates in the new media object, in the direction identified by arrow 3333). In some embodiments, the presentation application may scale up the media object as it appears in the foreground of the slide.

In some embodiments, slides of presentation created using the presentation application may include combinations of smart builds and action builds. For example, a slide may include a smart build (e.g., a Grid smart build) to which an action build is applied (e.g., move or rotate action builds). The resulting slide may include a Grid smart build in which several media objects move as directed by the Grid smart build, and in which the entire Grid smart build moves across the slide and rotates (e.g., 180 degrees). The user may use any suitable approach for combining smart builds and action builds, including for example listing smart builds in a build order window (e.g., build order window 533, FIG. 5)

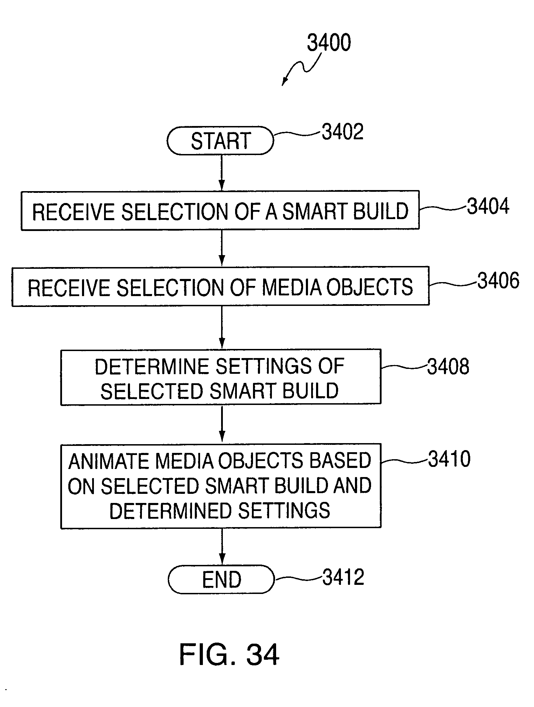

FIG. 34 is a flowchart of an illustrative process for adding a smart build to a slide of a presentation in accordance with one embodiment of the invention. Process 3400 may begin at step 3402. At step 3404, the presentation application may receive a selection of a smart build. For example, the presentation application may receive a user selection of a smart build (e.g., using input interface 102, FIG. 1). As another example, the presentation application may automatically select a smart build (e.g., a default smart build). At step 3406, the presentation application may receive a selection of media objects. For example, the presentation application may receive a user selection of several media objects. As another example, the presentation application may automatically select media objects (e.g., images from a default image folder). The media objects may include any suitable media object that can be included in a presentation, including for example text, audio, video, images, or any other suitable object or media object that may be included in a presentation.

At step 3408, the presentation application may determine the settings defined for the selected smart build. For example, the presentation application may display a window with smart build settings that the user may set (e.g., options in a build inspector or in a HUD). The user may set smart build settings at any suitable time, including for example when the smart build is first created, when the smart build is edited, or any other suitable time. At step 3410, the presentation application may animate the selected media objects based on the selected smart build and on the determined settings. For example, the presentation application may animate media objects selected at step 3406 by applying the smart build selected at' step 3404 with the settings determined at step 3408. Process 3400 may then end at step 3412.

A presentation application for animating objects placed on slides is provided. Using the presentation application, the user may add objects to slides of a presentation, and apply animations to the objects. The animations may include action builds (e.g., fundamental animations) and smart builds (e.g., complex combinations of action builds). The animations used in slides may be pre-processed, or may instead be rendered in real-time as the slides are being presented. The real-time rendering may be performed by graphics circuitry, such as the GPU of a video card.

The above described embodiments of the invention are presented for purposes of illustration and not of limitation, and the present invention is limited only by the claims which follow.

## Claims

1. A method for animating an object on a slide of a presentation using a presentation application implemented on an electronic device, comprising:
receiving a selection of an object to place on a slide; and
receiving a selection of an animation to apply to the object, wherein the animation of the object is rendered in real-time when the slide is presented.

2. The method of claim 1, further comprising rendering the animation in real-time using dedicated graphics circuitry of the electronic device.

3. The method of claim 2, wherein the dedicated graphics circuitry comprises a GPU.

4. The method of claim 1, wherein the animation is an action build.

5. The method of claim 4, wherein the action build is at least one of move, rotate, opacity and scale.

6. The method of claim 1, further comprising:
wherein receiving an animation comprises receiving a first animation;
receiving a selection of a second animation to apply to the object; and
applying the first animation and the second animation to object.

7. The method of claim 6, wherein applying the first animation and the second animation to the object further comprises at least one of sequentially applying the first animation and the second animation to the object and simultaneously applying the first animation and the second animation to the object.

8. A method for animating a plurality of objects on a slide of a presentation using a presentation application implemented on an electronic device, comprising:
receiving a selection of an animation, wherein the animation is associated with a slide;
receiving a selection of a plurality of objects, wherein selected animation is applied to the plurality of objects; and
rendering the animation in real-time to control the appearance of the plurality of objects when the slide is presented.

9. The method of claim 8, further comprising rendering the animation in real-time using dedicated graphics circuitry of the electronic device.

10. The method of claim 9, further comprising not using the dedicated graphics circuitry when the animation is not presented.

11. The method of claim 8, wherein the animation is a smart build.

12. The method of claim 11, wherein the smart build is at least one of dissolve, flip, grid, push, shuffle, spin, spinning cube, swap, thumb through, and turntable.

13. The method of claim 8, wherein the plurality of objects comprise at least two of text, audio, video, and images.

14. An electronic device for performing animations of objects using a presentation application, the electronic device comprising a display, graphics circuitry and a processor, the processor operative to:
receive a selection of an object to place on a slide of a presentation; and
receive a selection of an animation to apply to the object;
direct the display to display the slide in the context of a presentation; and
direct the graphics circuitry to render the animation in real-time for display on the display.

15. The electronic device of claim 14, wherein the processor is further operative to:
receive a selection of a second animation to apply to the object; and
direct the graphics circuitry to sequentially render the animations applied to the object.

16. The electronic device of claim 14, wherein the processor is further operative to:
receive a selection of a second animation to apply to the object; and
direct the graphics circuitry to simultaneously render the animations applied to the object.

17. The electronic device of claim 14, wherein the object comprises at least one of text, audio, video and images.

18. The electronic device of claim 14, wherein the animation is one of an active build and a smart build.
